# EUROPEAN PATENT SPECIFICATION

(11) **EP 2 348 676 B1**
(45) Date of publication and mention of the grant of the patent: **02.11.2016**
(21) Application number: 09820214.6
(22) Date of filing: 20.08.2009
(51) Int. Cl.: H04Q 3/00, H04L 29/08

(54) **METHOD FOR ACCESSING MAGNANIMITY DATA OF INTELLIGENT NETWORK SERVICE DATABASE AND SYSTEM AND DEVICE THEREOF**
VERFAHREN FÜR DEN ZUGANG ZU MAGNANIMITÄTSDATEN EINER DATENBANK EINES INTELLIGENTEN NETZWERKDIENSTES SOWIE SYSTEM UND VORRICHTUNG DAFÜR
PROCÉDÉ PERMETTANT D'ACCÉDER À DES DONNÉES DE SERVICE DE GRANDEUR D'UNE BASE DE DONNÉES DE SERVICE DE RÉSEAUX INTELLIGENTS, ET SYSTÈME ET DISPOSITIF PERMETTANT ASSOCIÉS

(30) Priority: 15.10.2008 CN 200810168294
(43) Date of publication of application: 27.07.2011
(73) Proprietor: ZTE Corporation, Shenzhen City, Guangdong Province 518057 (CN)
(72) Inventor: OU, Bing, Shenzhen City, Guangdong Province 518057 (CN); LAI, Tianjian, Shenzhen City, Guangdong Province 518057 (CN); WANG, Xianguang, Shenzhen City Guangdong Province 518057 (CN)
(74) Representative: Zerbi, Guido Maria
(86) International application number: PCT/CN2009/073385
(87) International publication number: WO 2010/043138

(56) References cited:
- WO-A1-01/86495
- WO-A1-2004/103012
- WO-A2-03/056867
- CN-A- 1 226 772
- CN-A- 101 035 306

## Description

### Technical Field

The present invention relates to a technique for accessing intelligent network (IN) service data, and particularly relates to a system, device and method for accessing massive data in intelligent network service databases.

### Background of the Invention

In the present intelligent network service field, with the constant emerging of new intelligent network services, application of the services has become more and more wide and the volume of various services has continuously jumped, and consequently, volume of the data needing to be stored and accessed in the service database has become larger and larger and massive service data appears in more and more systems, which greatly increases the pressure of accessing the service database and makes the service database a more and more obvious performance bottleneck in the entire intelligent network system, for example, response time is too long, running speed is too slow and storage load is too heavy, etc. In order to improve the system performance as well as the usability and real-time property of the intelligent network service, improving the performance of the service database becomes the most urgent thing.

Generally, many operators improve the performance of the service database by improving the hardware performance of the database server. However, in the present server application, for ten percent increase in hardware performance, several hundreds percent of cost may have to be paid, and the performance improvement is very limited, thus it is hard to achieve the desired performance result.

There are other operators who use multiple intelligent network systems to share the pressure. Although this way may achieve the desired performance result, it causes duplication of investment and a great waste of hardware resources, thus for the entire system, the cost paid is high.

The document WO 2004/103012A1 discloses a method and means for handling multiple services of an Intelligent Network within a mobile communication network.

### Summary of the Invention

The technical problem to be solved by the present invention is to provide a system, device and method for accessing massive data in intelligent network service databases, which can improve the data processing capability of the service database system with a cost as low as possible, thereby effectively improving the performance of the entire service system.

In order to solve the above technical problem, the present invention provides a system for accessing massive data in intelligent network service databases, comprising a service control function (SCF) entity and a service data function (SDF) entity, wherein:
the SDF entity is configured to provide a plurality of service database servers for storing massive service data of the same intelligent network system;
the SCF entity connects with the plurality of service database servers, and the SCF entity is configured to select a specific service database server according to service information of a user and a service key in accordance with a database reset policy when an intelligent network service establishes service data of the user, and to store the service data of the user in the specific service database server; to associate with and locate the specific service database server according to the service information of the user by using a method corresponding to the database reset policy when the user enters and uses the service; and to interact with the specific service database server to accomplish service function.

Preferably, the service information contains at least a unique identity of the user, and the unique identity of the user is a unique identification (ID) allocated by the system to the user or a telephone number of the user.

Preferably, the database reset policy is made according to one or more of the following attributes: a feature of the unique identity of the user, a service category and a media type of the service data.

In order to solve the above technical problem, the present invention provides a device for accessing massive data in intelligent network service databases, the device being deployed in a service control function (SCF) entity, and the SCF entity connecting with a plurality of service databases for storing massive service data of the same intelligent network system within a service data function (SDF) entity; the device comprising a database reset location module and a database association interaction module which connect with each other; wherein:
the database reset location module is configured to select a specific service database within the SDF entity according to a service key and acquired service information containing at least a unique identity of a user in accordance with a database reset policy when an intelligent network service system establishes service data of the user, and to output a storage indication signal and a number of the specific service database;
the database association interaction module is configured to associate the unique identity of the user carried in the storage indication with the number of the specific service database and then store the service data of the user in the specific service database upon receiving the storage indication; and to associate with the corresponding specific service database according to the unique identity of the user carried in an indication signal that the user enters and uses the service by using a method corresponding to the database reset policy upon receiving the indication signal, and to interact with the specific service database to accomplish subsequent service function.

Preferably, the device further comprises a reset policy editing module which connects with the database reset location module, and the reset policy editing module is configured to provide an interface for configuring or modifying the database reset policy for the SCF entity to adjust and optimize the,database reset policy.

Preferably, the unique identity of the user is a unique identification (ID) allocated by the system to the user or a telephone number of the user.

Preferably, the database reset policy is made according to one or more of the following attributes: a feature of the unique identity of the user, a service category and a media type of the service data.

In order to solve the above technical problem, the present invention provides a method for accessing massive data in intelligent network service databases, the method comprising:
when a user opens an account or service data of the user is established, a service control function (SCF) entity selecting a specific service database within a service data function (SDF) entity according to service information of the user and a service key in accordance with a database reset policy, and storing the service data in the specific service database; and
when the user enters and uses the service, the SCF entity associating with and locating the specific service database according to the service information by using a method corresponding to the database reset policy, and interacting with the specific service database to implement subsequent service function.

Preferably, the service information contains at least a unique identity of the user, and the unique identity of the user is a unique identification (ID) allocated by the system to the user or a telephone number of the user.

Preferably, the database reset policy is made according to one or more of the following attributes: a feature of the unique identity of the user, a service category and a media type of the service data.

Compared with the centralized service database in previous systems, the present invention utilizes distributed service databases to access service data, resets and locates the database used in an intelligent network service according to a database reset policy, and dispersedly stores massive service data to share the access pressure, thereby exponentially increasing the performance of accessing service data; moreover, the present invention optimally matches the service data volume and access frequency of each service database server by adjusting and optimizing the database reset policy, thus avoiding the database bottleneck, and therefore the use efficiency is improved and the system cost is saved. In engineering implementation, such scheme is simple to implement, ensuring that the data processing capability of the intelligent network service data function (SDF) entity can be conveniently and fast expanded, so that the data processing capability and the performance of the entire intelligent network service system can be improved.

### Brief Description of the Drawings

FIG. la is a schematic diagram of constructing an intelligent network by a system for accessing massive data in intelligent network service databases in accordance with the present invention;
FIG. 1b is a structural block diagram of a device newly added in a service control function (SCF) entity for accessing massive data in intelligent network service databases in accordance with the present invention;
FIG. 2 is a flow chart of a method for accessing massive data in intelligent network service databases in accordance with the present invention.

### Preferred Embodiments of the Present Invention

The system for accessing massive data in intelligent network service databases in the present invention includes a service control function entity and a service data function entity; wherein the service data function entity is configured to provide multiple database servers or multiple database cluster (i.e., multiple service databases) server facilities for the same intelligent network system; the service control function entity determines a service database in the multiple service databases within the service data function entity for storing service data of a user according to a unique identity of the user and a service key in accordance with a certain database reset policy when the user opens an account or the service data of the user is established; acquires the unique identity of the user when the user enters and uses the service, and in combination with the related information such as the service key used by the current service, locates and associates with the service database required to be reset in this service according to a method corresponding to the reset policy, and interacts with the service database to accomplish the service function.

The above technical solution of the present invention is described in detail below in conjunction with the drawings and preferred embodiments.

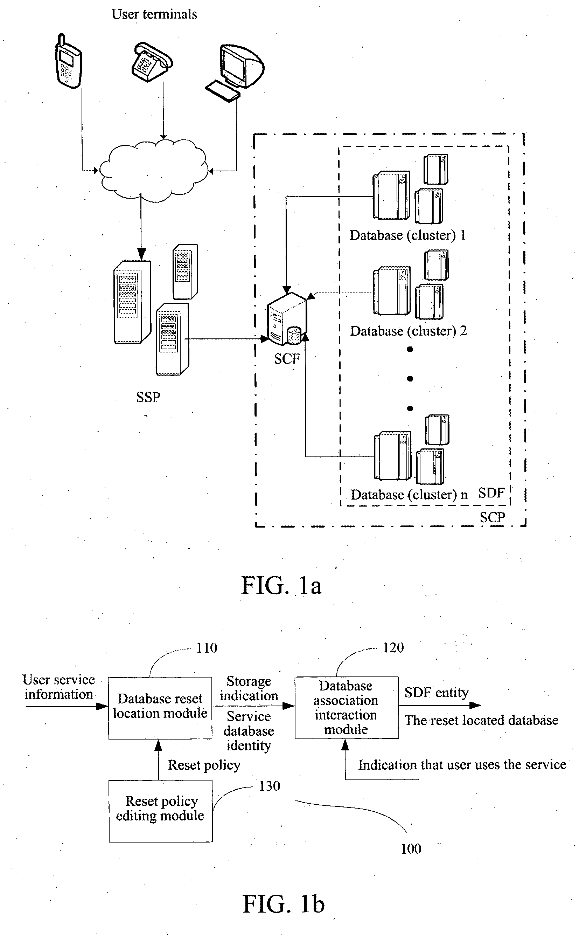

FIG. la illustrates a schematic diagram of constructing an intelligent network by the above-mentioned system of the present invention. As shown in FIG. 1a, main mobile communication network elements involved in implementation of the present invention include user terminals, a SSP (Service Switch Point) and a SCP (Service Control Point); wherein the SCP includes a SCF (Service Control Function) entity and a SDF (Service Data Function) entity. The SCF entity is mainly realized by a service processor, the SCF entity interacts with the SDF entity, executes certain service logic and accomplishes specific service function; the SDF entity is the data support of the SCF entity, and provides necessary service data for the SCF entity.

The system for accessing massive data in intelligent network service databases in the present invention includes the above-mentioned SCF entity and SDF entity, wherein:
the SDF entity is configured to provide multiple service database servers (i.e., multiple databases or multiple database clusters) for the same intelligent network system to store massive service data;
the SCF entity connects with the multiple service database servers within the SDF entity, and is configured
to select a specific service database server according to some service information such as a unique identity of a user (a telephone number of the user or a unique ID code allocated by the system to the user) and a service key in accordance with a certain database reset policy (such as a policy made according to the attribute of a feature of a number: the last digit or oddness/evenness of the number, or according to the attribute of a service category, or according to a media type of service data etc.) when the user of the intelligent network service opens an account or the service data of the user is established, and store the service data information required for the user to use the service in the selected service database server; and
when the user enters and uses the service via the service switch point (SSP), to acquire the related service information of the user, associate with and locate the service database server storing the service data information of the user by using a method corresponding to the database reset policy, and interact with the service database to accomplish the service function.

As such, in different situations where a user enters a service (different users or services), the service database server located by the SCF according to the reset policy is different, thereby ensuring that the pressure of interacting with the service databases of the SDF entity is shared, and achieving the purpose of improving the interaction performance; for these two aspects, the data processing capability of the entire system is improved and the performance of the system is guaranteed.

FIG. lb illustrates the structure of the device for executing the access of massive data in intelligent network service databases in the above-mentioned SCF entity in accordance with the present invention. The device 100 includes a database reset location module 110 and a database association interaction module 120, which connect with each other, and a reset policy editing module 130 which connects with the database reset location module 110, wherein:
the database reset location module 110 is configured to select a specific service database server in the SDF entity according to acquired service information of a user (such as a unique ID of the user and a service key) in accordance with a certain database reset policy when the intelligent network service system establishes the service data of the user, and to output a storage indication signal and a number or identity of the selected service database;
the database association interaction module 120 is configured to associate the unique ID of the user carried in the storage indication with the number or identity of the selected service database and then store the service data of the user in the selected service database upon receiving the storage indication; and upon receiving an indication signal that the user enters and uses the service, to associate with the corresponding service database according to the unique ID of the user carried in the indication, and interact with the service database to accomplish subsequent service function;
the reset policy editing module 130 is configured to output a default or a configured or modified database reset policy, and to provide a interface for editing and modifying the reset policy for the SCF entity to adjust and optimize the database reset policy.

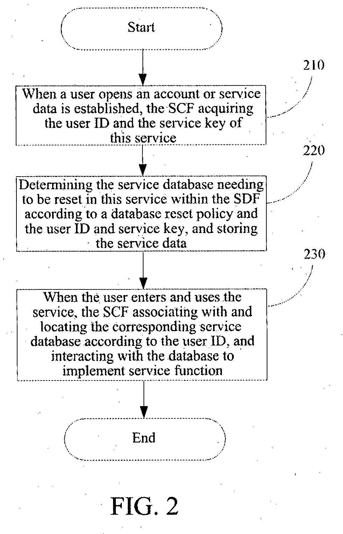

FIG. 2 illustrates the flow of a method for accessing massive data in intelligent network service databases in accordance with the present invention, the method comprising the following steps:
210. When a user opens an account or service data of the user is established, the SCF acquires related information such as a unique identity of the user and a service key;
   wherein the unique identity of the user is not limited to a unique ID of the user allocated by the system or a telephone number of the user.
220. the SCF determines a specific service database (database or database cluster) within
   the SDF entity according to the user ID and the service key in accordance with a certain database reset policy, and stores the service data of the user in the service database;
230. When the user enters and uses the service via the SSP, the SCF associates with and locates the corresponding service database according to the user ID, and interacts with the service database to implement subsequent service function.

During the service function execution process, the SCF may further associate with and locate another specific service database within the SDF entity according to a certain condition so as to continue the service function by using the service data of other related service database.

The present invention has no special limitation of the source of the user who uses the service. The user may access the service via a special network by a mobile phone, a fixed phone or the Internet.

To sum up, the present invention resets and locates the multiple service databases in the SDF entity according to a certain database reset policy to dispersedly access massive service data, thereby sharing the pressure of accessing massive service data, and with little cost input, the present invention can improve the performance of service data interaction and access as well as the overall data processing capability of the system, and can also improve the use efficiency of the service system. Besides, the implementation in engineering is simple, and thus it is convenient to spread and apply.

### Industrial Applicability

Compared with the centralized service database in previous systems, the present invention utilizes distributed service databases to access service data, resets and locates the database used in an intelligent network service according to a database reset policy, and dispersedly stores massive service data to share the access pressure, thereby exponentially increasing the performance of accessing service data; moreover, the present invention optimally matches the service data volume and access frequency of each service database server by adjusting and optimizing the database reset policy, thus avoiding the database bottleneck, and therefore the use efficiency is improved and the system cost is saved. In engineering implementation, such scheme is simple to implement, ensuring that the data processing capability of the intelligent network service data function (SDF) entity can be conveniently and fast expanded, so that the data processing capability and the performance of the entire intelligent network service system can be improved.

## Claims

1. A system for accessing massive data in intelligent network service databases, **characterized in that** the system comprises a service control function (SCF) entity and a service data function (SDF) entity, wherein:
the SDF entity is configured to provide a plurality of service database servers for storing massive service data of the same intelligent network system;
the SCF entity connects with the plurality of service database servers, and the SCF entity is configured to select a specific service database server according to service information of a user and a service key in accordance with a database reset policy when an intelligent network service establishes service data of the user, and to store the service data of the user in the specific service database server; to associate with and locate the specific service database server according to the service information of the user by using a method corresponding to the database reset policy when the user enters and uses the service; and to interact with the specific service database server to accomplish service function.

2. The system according to claim 1, wherein the service information contains at least a unique identity of the user, and the unique identity of the user is a unique identification (ID) allocated by the system to the user or a telephone number of the user.

3. The system according to claim 2, wherein the database reset policy is made according to one or more of the following attributes: a feature of the unique identity of the user, a service category and a media type of the service data.

4. A device for accessing massive data in intelligent network service databases, **characterized in that** the device is used in a service control function (SCF) entity, and the SCF entity connects with a plurality of service databases for storing massive service data of the same intelligent network system within a service data function (SDF) entity; the device comprises a database reset location module and a database association interaction module which connect with each other; wherein:
the database reset location module is configured to select a specific service database within the SDF entity according to a service key and acquired service information containing at least a unique identity of a user in accordance with a database reset policy when an intelligent network service system establishes service data of the user, and to output a storage indication signal and a number of the specific service database;
the database association interaction module is configured to associate the unique identity of the user carried in the storage indication with the number of the specific service database and then store the service data of the user in the specific service database upon receiving the storage indication; and to associate with the corresponding specific service database according to the unique identity of the user carried in an indication signal that the user enters and uses the service by using a method corresponding to the database reset policy upon receiving the indication signal, and to interact with the specific service database to accomplish subsequent service function.

5. The device according to claim 4, wherein the device further comprises a reset policy editing module which connects with the database reset location module, and the reset policy editing module is configured to provide an interface for configuring or modifying the database reset policy for the SCF entity to adjust and optimize the database reset policy.

6. The device according to claim 4 or 5, wherein the unique identity of the user is a unique identification (ID) allocated by the system to the user or a telephone number of the user.

7. The device according to claim 4 or 5, wherein the database reset policy is made according to one or more of the following attributes: a feature of the unique identity of the user, a service category and a media type of the service data.

8. A method for accessing massive data in intelligent network service databases, **characterized in that** the method comprises:
when service data of a user is established, a service control function (SCF) entity selecting a specific service database within a service data function (SDF) entity according to service information of the user and a service key in accordance with a database reset policy, and storing the service data in the specific service database; and
when the user enters and uses the service, the SCF entity associating with and locating the specific service database according to the service information by using a method corresponding to the database reset policy, and interacting with the specific service database to implement subsequent service function.

9. The method according to claim 8, wherein the service information contains at least a unique identity of the user, and the unique identity of the user is a unique identification (ID) allocated by the system to the user or a telephone number of the user.

10. The method according to claim 8 or 9, wherein the database reset policy is made according to one or more of the following attributes: a feature of the unique identity of the user, a service category and a media type of the service data.

## Patentansprüche

1. Ein System zum Zugreifen auf massive Daten in Datenbanken eines intelligenten Netzwerkdienstes, **dadurch gekennzeichnet, dass** das System eine Dienststeuerungsfunktionseinheit (SCF-Einheit) und eine Dienstdatenfunktionseinheit (SDF-Einheit) beinhaltet, wobei:
die SDF-Einheit konfiguriert ist, um eine Vielzahl von Dienstdatenbankservern zum Speichern massiver Dienstdaten des gleichen intelligenten Netzwerksystems bereitzustellen;
sich die SCF-Einheit mit der Vielzahl von Dienstdatenbankservern verknüpft und die SCF-Einheit konfiguriert ist, um einen spezifischen Dienstdatenbankserver gemäß den Dienstinformationen eines Benutzers und einen Dienstschlüssel gemäß einer Datenbankrücksetzungsrichtlinie auszuwählen, wenn ein intelligenter Netzwerkdienst Dienstdaten des Benutzers festlegt, und die Dienstdaten des Benutzers in dem spezifischen Dienstdatenbankserver zu speichern; eine Verbindung mit dem spezifischen Dienstdatenbankserver gemäß den Dienstinformationen des Benutzers durch die Verwendung eines Verfahrens, das der Datenbankrücksetzungsrichtlinie entspricht, wenn der Benutzer in den Dienst eintritt und diesen verwendet, herzustellen und zu lokalisieren; und mit dem spezifischen Dienstdatenbankserver interagieren, um die Dienstfunktion auszuführen.

2. System gemäß Anspruch 1, wobei die Dienstinformationen mindestens eine eindeutige Identität des Benutzers enthalten, und die eindeutige Identität des Benutzers eine eindeutige Identifikation (ID) ist, die dem Benutzer oder einer Telefonnummer des Benutzers durch das System zugeteilt wird.

3. System gemäß Anspruch 2, wobei die Datenbankrücksetzungsrichtlinie gemäß einem oder mehreren der folgenden Kennzeichen vorgenommen wird: einem Merkmal der eindeutigen Identität des Benutzers, einer Dienstkategorie und einem Medientyp der Dienstdaten.

4. Eine Vorrichtung zum Zugreifen auf massive Daten in Datenbanken eines intelligenten Netzwerkdienstes, **dadurch gekennzeichnet, dass** die Vorrichtung in einer Dienststeuerungsfunktionseinheit (SCF-Einheit) verwendet wird und sich die SCF-Einheit mit einer Vielzahl von Dienstdatenbanken zum Speichern massiver Dienstdaten des gleichen intelligenten Netzwerksystems in einer Dienstdatenfunktionseinheit (SDF-Einheit) verknüpft; die Vorrichtung beinhaltet ein Datenbankrücksetzungslokalisierungsmodul und ein Datenbankverbindungsinteraktionsmodul, die miteinander verknüpft sind; wobei:
das Datenbankrücksetzungslokalisierungsmodul konfiguriert ist, um eine spezifische Dienstdatenbank in der SDF-Einheit gemäß einem Dienstschlüssel und erlangten Dienstinformationen, die mindestens eine eindeutige Identität eines Benutzers gemäß einer Datenbankrücksetzungsrichtlinie enthalten, auszuwählen, wenn ein intelligentes Netzwerkdienstsystem Dienstdaten des Benutzers festlegt, und ein Speicherungshinweissignal und eine Zahl der spezifischen Dienstdatenbank auszugeben;
das Datenbankverbindungsinteraktionsmodul konfiguriert ist, um eine Verbindung mit der eindeutigen Identität des Benutzers, die in dem Speicherungshinweis mit der Zahl der spezifischen Dienstdatenbank getragen wird, herzustellen und dann bei Empfang des Speicherungshinweises die Dienstdaten des Benutzers in der spezifischen Dienstdatenbank zu speichern; und mit der entsprechenden spezifischen Dienstdatenbank gemäß der eindeutigen Identität des Benutzers, die in einem Hinweissignalgetragen wird, das der Benutzer eingibt und den Dienst durch das Verwenden eines Verfahrens entsprechend der Datenbankrücksetzungsrichtlinie bei Empfang des Hinweissignals verwendet, eine Verbindung herzustellen und mit der spezifischen Dienstdatenbank zu interagieren, um die nachfolgende Dienstfunktion auszuführen.

5. Vorrichtung gemäß Anspruch 4, wobei die Vorrichtung ferner ein Rücksetzungsrichtlinieneditierungsmodul beinhaltet, das mit dem Datenbankrücksetzungslokalisierungsmodul verknüpft ist, und das Rücksetzungsrichtlinieneditierungsmodul konfiguriert ist, um eine Schnittstelle zum Konfigurieren oder Modifizieren der Datenbankrücksetzungsrichtlinie für die SCF-Einheit zum Anpassen und Optimieren der Datenbankrücksetzungsrichtlinie bereitzustellen.

6. Vorrichtung gemäß Anspruch 4 oder 5, wobei die eindeutige Identität des Benutzers eine eindeutige Identifikation (ID) ist, die dem Benutzer oder einer Telefonnummer des Benutzers durch das System zugeteilt wird.

7. Vorrichtung gemäß Anspruch 4 oder 5, wobei die Datenbankrücksetzungsrichtlinie gemäß einem oder mehreren der folgenden Kennzeichen vorgenommen wird: einem Merkmal der eindeutigen Identität des Benutzers; einer Dienstkategorie und einem Medientyp der Dienstdaten.

8. Ein Verfahren zum Zugreifen auf massive Daten in Datenbanken eines intelligenten Netzwerkdienstes, **dadurch gekennzeichnet, dass** das Verfahren Folgendes beinhaltet:
wenn Dienstdaten eines Benutzers festgelegt sind, Auswählen einer spezifischen Dienstdatenbank in einer Dienstdatenfunktionseinheit (SDF-Einheit) gemäß Dienstinformationen des Benutzers und eines Dienstschlüssels gemäß einer Datenbankrücksetzungsrichtlinie durch eine Dienststeuerungsfunktionseinheit (SCF-Einheit), und Speichern der Dienstdaten in der spezifischen Dienstdatenbank; und
wenn der Benutzer in den Dienst eintritt und diesen verwendet, Herstellen einer Verbindung mit und Lokalisieren der spezifischen Dienstdatenbank gemäß den Dienstinformationen durch die SCF-Einheit durch das Verwenden eines Verfahrens, das der Datenbankrücksetzungsrichtlinie entspricht, und Interagieren mit der spezifischen Dienstdatenbank, um die nachfolgende Dienstfunktion zu implementieren.

9. Verfahren gemäß Anspruch 8, wobei die Dienstinformationen mindestens eine eindeutige Identität des Benutzers enthalten, und die eindeutige Identität des Benutzers eine eindeutige Identifikation (ID) ist, die dem Benutzer oder einer Telefonnummer des Benutzers durch das System zugeteilt wird.

10. Verfahren gemäß Anspruch 8 oder 9, wobei die Datenbankrücksetzungsrichtlinie gemäß einem oder mehreren der folgenden Kennzeichen vorgenommen wird: einem Merkmal der eindeutigen Identität des Benutzers; einer Dienstkategorie und einem Medientyp der Dienstdaten.

## Revendications

1. Un système pour accéder à des données de masse dans des bases de données de service de réseaux intelligents, **caractérisé en ce que** le système comprend une entité de fonction de contrôle de service (SCF) et une entité de fonction de données de service (SDF), dans lequel :
l'entité de SDF est configurée pour fournir une pluralité de serveurs de bases de données de service afin de stocker des données de service de masse du même système de réseaux intelligents ;
l'entité de SCF se connecte à la pluralité de serveurs de bases de données de service, et l'entité de SCF est configurée pour sélectionner un serveur de base de données de service spécifique selon une information de service d'un utilisateur et une clé de service conformément à une politique de réinitialisation de base de données lorsqu'un service de réseau intelligent établit des données de service de l'utilisateur, et pour stocker les données de service de l'utilisateur dans le serveur de base de données de service spécifique ; pour s'associer avec et localiser le serveur de base de données de service spécifique selon l'information de service de l'utilisateur en utilisant une méthode correspondant à la politique de réinitialisation de base de données lorsque l'utilisateur entre dans et utilise le service ; et pour interagir avec le serveur de base de données de service spécifique afin d'accomplir une fonction de service.

2. Le système selon la revendication 1, dans lequel l'information de service contient au moins une identité inédite de l'utilisateur, et l'identité inédite de l'utilisateur est une identification (ID) inédite allouée par le système à l'utilisateur ou à un numéro de téléphone de l'utilisateur.

3. Le système selon la revendication 2, dans lequel la politique de réinitialisation de base de données est faite selon un ou plusieurs des attributs suivants : une caractéristique de l'identité inédite de l'utilisateur, une catégorie de service et un type de média des données de service.

4. Un dispositif pour accéder à des données de masse dans des bases de données de service de réseaux intelligents, **caractérisé en ce que** le dispositif est utilisé dans une entité de fonction de contrôle de service (SCF), et que l'entité de SCF se connecte à une pluralité de bases de données de service afin de stocker des données de service de masse du même système de réseaux intelligents au sein d'une entité de fonction de données de service (SDF) ; le dispositif comprend un module de localisation de réinitialisation de base de données et un module d'interaction d'association de base de données qui se connectent l'un à l'autre ; dans lequel :
le module de localisation de réinitialisation de base de données est configuré pour sélectionner une base de données de service spécifique au sein de l'entité de SDF selon une clé de service et une information de service acquise contenant au moins une identité inédite d'un utilisateur conformément à une politique de réinitialisation de base de données lorsqu'un système de service de réseau intelligent établit des données de service de l'utilisateur, et pour produire un signal d'indication de stockage et un numéro de la base de données de service spécifique ;
le module d'interaction d'association de base de données est configuré pour associer l'identité inédite de l'utilisateur portée dans l'indication de stockage au numéro de la base de données de service spécifique et ensuite pour stocker les données de service de l'utilisateur dans la base de données de service spécifique après avoir reçu l'indication de stockage ; et pour s'associer à la base de données de service spécifique correspondante selon l'identité inédite de l'utilisateur portée dans un signal d'indication suivant lequel l'utilisateur entre dans et utilise le service en utilisant une méthode correspondant à la politique de réinitialisation de base de données après avoir reçu le signal d'indication, et pour interagir avec la base de données de service spécifique afin d'accomplir une fonction de service ultérieure.

5. Le dispositif selon la revendication 4, le dispositif comprenant en outre un module d'édition de politique de réinitialisation qui se connecte au module de localisation de réinitialisation de base de données, et le module d'édition de politique de réinitialisation étant configuré pour fournir une interface afin de configurer ou de modifier la politique de réinitialisation de base de données pour l'entité de SCF pour ajuster et optimiser la politique de réinitialisation de base de données.

6. Le dispositif selon la revendication 4 ou la revendication 5, dans lequel l'identité inédite de l'utilisateur est une identification (ID) inédite allouée par le système à l'utilisateur ou à un numéro de téléphone de l'utilisateur.

7. Le dispositif selon la revendication 4 ou la revendication 5, dans lequel la politique de réinitialisation de base de données est faite selon un ou plusieurs des attributs suivants : une caractéristique de l'identité inédite de l'utilisateur, une catégorie de service et un type de média des données de service.

8. Une méthode pour accéder à des données de masse dans des bases de données de service de réseaux intelligents, **caractérisée en ce que** la méthode comprend :
lorsque des données de service d'un utilisateur sont établies, le fait qu'une entité de fonction de contrôle de service (SCF) sélectionne une base de données de service spécifique au sein d'une entité de fonction de données de service (SDF) selon une information de service de l'utilisateur et une clé de service conformément à une politique de réinitialisation de base de données, et stocke les données de service dans la base de données de service spécifique ; et
lorsque l'utilisateur entre dans et utilise le service, le fait que l'entité de SCF s'associe avec et localise la base de données de service spécifique selon l'information de service en utilisant une méthode correspondant à la politique de réinitialisation de base de données, et interagit avec la base de données de service spécifique afin de mettre en oeuvre une fonction de service ultérieure.

9. La méthode selon la revendication 8, dans laquelle l'information de service contient au moins une identité inédite de l'utilisateur, et l'identité inédite de l'utilisateur est une identification (ID) inédite allouée par le système à l'utilisateur ou à un numéro de téléphone de l'utilisateur.

10. La méthode selon la revendication 8 ou la revendication 9, dans laquelle la politique de réinitialisation de base de données est faite selon un ou plusieurs des attributs suivants : une caractéristique de l'identité inédite de l'utilisateur, une catégorie de service et un type de média des données de service.
